# FASCICULE DE BREVET EUROPEEN

(11) **EP 0 764 795 B1**
(45) Date de publication et mention de la délivrance du brevet: **16.08.2000**
(21) Numéro de dépôt: 96401998.8
(22) Date de dépôt: 19.09.1996
(51) Int. Cl.: F16F 9/32, F16F 9/348

(54) **Piston à clapet pour tube d'amortisseur hydraulique**
Ventilkolben für hydraulischen Dämpfer
Piston with valve, for hydraulic damper

(30) Priorité: 20.09.1995 FR 9511050
(43) Date de publication de la demande: 26.03.1997
(73) Titulaire: SOCIETE FRANCAISE DES AMORTISSEURS DE CARBON, F-27430 Saint Pierre du Vauvray (FR)
(72) Inventeur: Bataille, Alain, 75015 Paris (FR)
(74) Mandataire: Casalonga, Axel

(56) Documents cités:
- EP-A- 0 395 565
- EP-A- 0 438 055
- EP-A- 0 473 526
- DE-A- 3 530 490
- FR-A- 2 661 726
- GB-A- 775 221
- US-A- 2 078 364
- US-A- 3 321 051

## Description

L'invention concerne les pistons à clapet pour tubes d'amortisseurs hydrauliques, en particulier les pistons à clapet flottant pour les amortisseurs de type bitubes ou de type monotube pressurisé.

Un amortisseur hydraulique comporte un piston apte à coulisser à l'intérieur d'un tube pour séparer l'espace interne de celui-ci en deux chambres remplies d'un liquide d'amortissement. Un passage traversant est prévu au sein du piston pour mettre en communication les deux chambres, et coopère avec un système de clapet régulant l'ouverture du passage en fonction du sens d'écoulement du fluide qui dépend du fait que l'amortisseur se trouve dans une phase d'extension ou de compression.

Ce système de clapet présente une discontinuité de fonctionnement se traduisant par le fait que la pression nécessaire pour ouvrir le clapet est plus forte que la pression nécessaire pour maintenir le clapet ouvert. Il en est de même pour la fermeture de ce dernier. Cette discontinuité de fonctionnement engendre des bruits et vibrations indésirables pendant le fonctionnement de l'amortisseur.

Un piston pour clapet flottant est décrit par exemple dans FR 2661726 (figures 5 et 6).

Par ailleurs, et en particulier dans les amortisseurs monotubes pressurisés équipés d'un piston à clapet flottant, la valeur du diamètre interne de la zone d'appui (communément appelée "diamètre d'appui") sur laquelle repose le clapet, joue un rôle essentiel pour la loi d'amortissement désirée. Il en est de même en ce qui concerne la précontrainte de la rondelle formant le clapet flottant proprement dit. Or, il s'avère que les structures actuelles de piston à clapet, en particulier à clapet flottant, ne permettent pas non seulement de résoudre de façon satisfaisante le problème des bruits et vibrations, mais conduisent également, lors de leur fabrication en série, à des disparités d'un piston à l'autre, au niveau des valeurs du diamètre d'appui et de la précontrainte du clapet, ce qui fournit pour une même série de fabrication, des pistons ayant des comportements différents en fonctionnement.

L'invention vise à apporter une solution à ces problèmes.

Un but de l'invention est de réduire de façon plus satisfaisante les bruits et vibrations lors du fonctionnement de l'amortisseur, occasionnés en particulier par le collage hydraulique entre le clapet et son siège.

L'invention a également pour but de proposer une structure de piston garantissant des valeurs de diamètre d'appui et des précontraintes de clapet, quasiment identiques d'un piston à l'autre, et conformes aux plans de fabrication.

L'invention propose donc un piston pour clapet flottant pour tube d'amortisseur hydraulique, comprenant un corps de piston possédant sur une de ses faces une zone d'appui annulaire sur laquelle est destiné à s'appuyer le clapet flottant. Selon une caractéristique nouvelle de l'invention, la zone d'appui est réalisée en un matériau présentant une dureté supérieure à 50 HRB (dureté ROCKWELL B), la largeur de la zone d'appui annulaire est inférieure ou égale à 0,6 mm et la surface de cette zone d'appui présente une rugosité moyenne (Ra) notamment définie par la norme DIN 476 8/1, mesurée avec une longueur d'onde de 0,8 mm, comprise entre 0,0015 mm et 0,02 mm.

La rugosité moyenne Ra (c'est-à-dire la rugosité Ra définie notamment par la norme DIN 4768/1 comme étant la moyenne arithmétique au sein de la course de mesure, des écarts du profil de rugosité filtré, par rapport à la ligne moyenne) qui est plus faible que celle obtenue par exemple par un moletage, contribue avec la largeur réduite de la zone d'appui, à minimiser, voire à éviter, le collage du clapet sur celle-ci ce qui supprime cette cause de bruit et de vibration. La dureté du matériau utilisé contribue notamment à l'obtention d'une résistance durable de la surface faiblement rugueuse de la zone d'appui à l'effet de matage dû à l'ouverture et à la fermeture du clapet. Cette résistance au matage permet ainsi de réduire durablement les bruits et vibrations par la conservation dans le temps de la dimension et de la rugosité de la surface. Elle permet simultanément, en évitant un élargissement et/ou un affaissement de cette zone d'appui, de garantir dans le temps une valeur constante pour le diamètre d'appui et la précontrainte du clapet. Il est à noter en outre que la faible rugosité du piston selon l'invention contribue à obtenir de façon quasi certaine, un diamètre d'appui et une précontrainte conformes à ceux définis sur plan, alors qu'un moletage de la zone d'appui ne le permet pas, en raison de la dégradation des bords de celle-ci.

Dans le cas notamment d'une réalisation du piston en acier, par exemple à partir d'une poudre compactée, la densité du matériau est de préférence au moins égale à 6,4 de façon à contribuer à l'obtention de l'endurance au matage. Néanmoins, une réalisation en fonte ou en aluminium haute performance suivie d'une anodisation dure n'est pas exclue et conduirait à une densité différente.

La largeur de la zone d'appui annulaire peut être avantageusement supérieure ou égale à 0,3 mm et inférieure ou égale à 0,5 mm. En effet, il a été observé qu'en deçà de 0,3 mm, il existe un risque d'affaissement de la zone d'appui pouvant entraîner une modification de la précontrainte du clapet. Au-delà de 0,5 mm, le résultat recherché au niveau de la diminution de l'effet de collage est moins satisfaisant.

Selon un mode de réalisation de l'invention, la zone d'appui annulaire est délimitée par deux arêtes annulaires concentriques, l'arête annulaire interne délimitant un évidement dans lequel débouchent une pluralité d'alvéoles. La distance radiale entre le bord de chaque alvéole et l'arête annulaire interne est non nulle.

Le fait de prévoir des alvéoles ayant un diamètre plus petit que la largeur (comptée radialement) de l'évidement annulaire permet, lors de la réalisation de ces alvéoles, de ne pas altérer ou endommager le bord de l'évidement contenant ladite arête annulaire interne. Ainsi, la valeur du diamètre d'appui ne risque pas d'être modifiée lors de la réalisation des alvéoles.

Par ailleurs, il est avantageux que la face latérale annulaire de l'évidement, définissant avec la zone d'appui ladite arête annulaire interne, soit sensiblement perpendiculaire au plan moyen de ladite zone d'appui. En d'autres termes, le bord franc de la zone d'appui, du côté de l'évidement annulaire, est de préférence vertical, au lieu d'être par exemple incliné, de façon à permettre un contrôle aisé de la valeur du diamètre d'appui lors du flux de fabrication.

Selon un mode de réalisation de l'invention, la face du piston possédant ladite zone d'appui comporte en outre une zone centrale (zone de pied) coplanaire avec la zone d'appui. En pratique ceci est obtenu par rectification de la face du piston. On obtient ainsi une bonne référence pour l'ajustement de la précontrainte du clapet.

D'autres avantages et caractéristiques de l'invention apparaîtront à l'examen de la description détaillée d'un mode de réalisation, nullement limitatif, et des dessins annexés sur lesquels :
- la figure 1 est une coupe longitudinale schématique d'un tube d'amortisseur équipé d'un piston selon l'invention,
- la figure 2 est une coupe plus détaillée du piston de la figure 1, et
- la figure 3 représente un piston selon l'invention pourvu de son système de clapet flottant monté dans le tube de l'amortisseur.

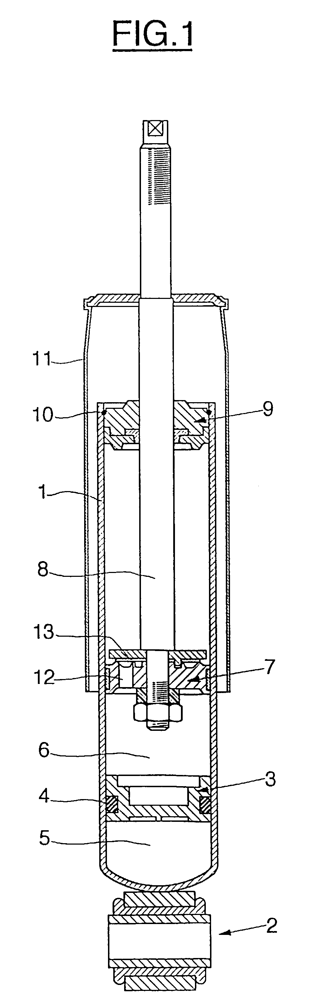

Tel qu'il est illustré sur la figure 1, l'amortisseur hydraulique télescopique monotube comprend un cylindre ou tube 1 fixé à l'une des ses extrémités par un oeillet 2. Un piston séparateur gaz/liquide, ou diaphragme 3, monté libre à coulissement dans le cylindre 1, est muni d'un joint torique d'étanchéité 4 et sépare le cylindre en deux portions. Une portion 5 contient un gaz sous pression et l'autre portion 6 est remplie de liquide hydraulique d'amortissement. Un autre piston 7 est fixé à l'extrémité d'une tige 8 dont le déplacement dans le cylindre 1 est guidé par le guide 9 fixé au cylindre par des moyens de fixation 10.

L'extrémité extérieure de la tige 8 est fixée à un goujon de fixation.

L'amortisseur est complété par un protecteur 11 solidaire de la tige 8 et venant coiffer une partie du cylindre 1.

Pour assurer le fonctionnement de l'amortisseur, le piston 7 comporte des passages permanents 12 ou alvéoles, pour le liquide hydraulique, coopérant avec un système de clapet, dit flottant 13.

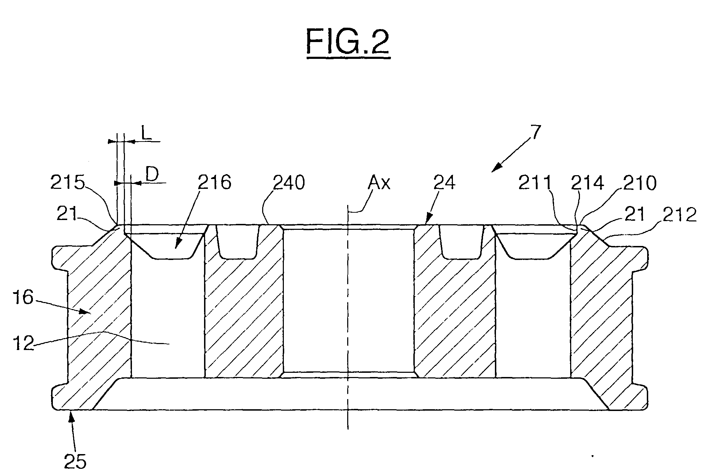

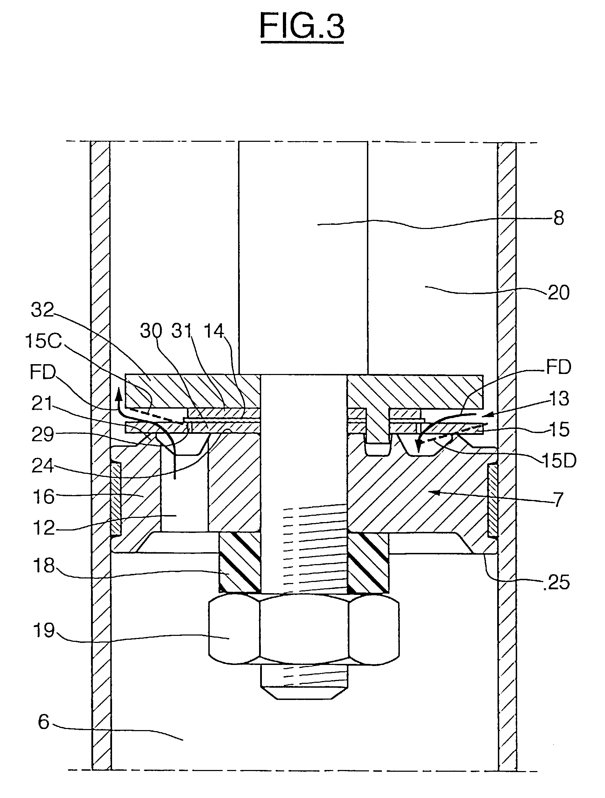

Tel qu'illustré sur les figures 2 et 3, le piston 7 comporte un corps de piston 16, de forme générale cylindrique, apte à coulisser à l'intérieur du tube 1 et comportant une pluralité d'alvéoles de section circulaire ou trapézoïdale, par exemple au nombre de huit. Ces alvéoles définissent le passage permanent 12 pour le liquide hydraulique entre la chambre supérieure 20 et la chambre inférieure 6. Il est à noter que, alors que la figure 2 est une section longitudinale dans le plan de symétrie de deux alvéoles, la partie gauche de la figure 3 est une section longitudinale dans le plan de symétrie d'une alvéole tandis que la partie droite de cette figure est une section longitudinale effectuée entre deux alvéoles. Par ailleurs, bien que chaque alvéole constitue une voie de passage bi-directionnelle par le fluide, la partie gauche de la figure 3 illustre, à des fins de simplification, la configuration des éléments dans la phase de compression tandis que la partie droite illustre la configuration dans la phase de détente.

Un système de clapet 13, dit flottant, est disposé sur la face supérieure 24 du corps de piston 16 et comporte, de façon classique, une plaque annulaire centrale 30 entourée d'une couronne 15, formant le clapet flottant proprement dit, et reposant en appui d'une part sur une zone d'appui 210 formée par un épaulement 21 du corps de piston, et d'autre part, contre le bord libre d'une autre plaque 14 située sur la plaque centrale et débordant légèrement de celle-ci. Le clapet flottant 15 définit avec la plaque centrale 30 un espace 29.

La plaque 14 est prise en sandwich entre la plaque centrale 30 et une autre plaque 31. Cet ensemble de plaque est lui-même plaqué contre la zone centrale 214 (zone de pied) de la face du piston, par une plaque supérieure 32 munie de deux ergots fixés dans le corps du piston.

Le clapet flottant 15 est apte à fléchir selon la position 15C dans la phase de compression de l'amortisseur pour se décoller de la zone d'appui 210 de l'épaulement 21 du piston et autoriser le passage du fluide selon la flèche FC. Dans la phase d'extension, le clapet 15 s'oriente selon la position 15D en se décollant de la plaque supérieure 15 pour autoriser le passage du fluide selon la flèche FD.

Le piston 7 est maintenu sur la tige 8 entre un épaulement de cette dernière, au contact duquel vient la surface supérieure de la plaque supérieure 32, et une rondelle 18 serrée contre le face inférieure 25 du piston à l'aide d'un écrou 19 coopérant avec le filetage de la tige 8.

La zone d'appui 210 de l'épaulement 21 est délimitée extérieurement par une arête annulaire externe 215, et, intérieurement, par une arête annulaire interne 214. La distance radiale entre ces deux arêtes définit la largeur L de la zone d'appui qui, dans un mode préféré de réalisation est égale à 0,4 mm pour un corps de piston dont le diamètre d'appui, c'est-à-dire la distance séparant l'axe AX du corps de piston et l'arête annulaire interne 214, égale à environ 27 mm.

Par ailleurs, la zone centrale 240, ou zone de pied, de la face supérieure 24 du corps de piston, c'est-à-dire la zone sur laquelle repose la plaque centrale 30 du système de clapet, est rendue coplanaire avec la zone d'appui 210, par rectification de la face 24.

Bien qu'il soit possible de réaliser le corps de piston en acier trempé, une réalisation par une poudre compactée, ayant une densité de 6,6 à 6,8 est préférable, notamment pour des questions de coût et de bonne reproductibilité avec des tolérances très précises. Après traitement de surface de la face supérieure 24 du corps de piston, par exemple par carbonitruration, on obtient une dureté supérieure ou égale à 50 HRB, typiquement supérieure ou égale à 60 HRB.

La rugosité de la zone d'appui 210 est obtenue, après rectification plane de la face 24, par exemple par grenaillage par projection. On obtient alors typiquement une rugosité comprise entre 0,0015 mm et 0,0032 mm, mesurée avec une longueur d'onde (cut off en langue anglaise) de 0,8 mm.

L'homme du métier comprend aisément que, puisque le clapet flottant 15 repose d'une part sur la zone d'appui 210 et d'autre part contre la partie débordante de la plaque 14 reposant elle-même, par l'intermédiaire de la plaque centrale 30, sur la zone de pied 214, le dénivelé éventuel entre la zone d'appui 210 et la zone de pied 214 influe sur le positionnement du clapet flottant, c'est-à-dire sur la précontrainte de la rondelle qui le forme. Si ce dénivelé n'est pas constant d'un piston à l'autre, l'ajustement de la précontrainte de la rondelle, en jouant par exemple sur l'épaisseur de la plaque 30, n'est pas fiable d'un piston à l'autre. La rectification de la face 24 permet de garantir pour tout piston fabriqué en série, l'absence de dénivelé entre les zones d'appui et de pied. Cette absence de dénivelé constitue une référence pour l'ajustement de la précontrainte du clapet flottant, cette référence étant identique pour chaque piston.

L'arête annulaire interne 214 délimite un évidement 216 dans lequel débouchent les alvéoles 12. L'arête annulaire 214 est définie par la zone d'appui 210 et le bord franc vertical 211 qui forme pour l'évidement annulaire 216 une face latérale sensiblement perpendiculaire au plan moyen de la zone d'appui 210.

Bien qu'un tel bord vertical ne soit pas indispensable et puisse être remplacé par un bord incliné, comme le bord incliné externe 212 de l'épaulement 21, il facilite cependant le contrôle, lors de la fabrication, de la valeur du diamètre d'appui.

Il convient de remarquer que la distance radiale D entre le bord d'une alvéole 12 et le bord vertical 211 de l'épaulement 21 est non nulle. Ceci permet, par rapport à des alvéoles dont le bord extérieur serait dans l'alignement du bord 211 de la zone d'appui, de ne pas risquer d'altérer cette face latérale 211 de l'évidement lors de la réalisation des alvéoles, et donc par voie de conséquence de ne pas altérer la valeur du diamètre d'appui.

## Revendications

1. Piston pour clapet flottant pour tube d'amortisseur hydraulique, comprenant un corps de piston (16) possédant sur une de ses faces (24) une zone d'appui annulaire (210) sur laquelle est destiné à s'appuyer le clapet flottant (15), caractérisé par le fait que la zone d'appui (210) est réalisée en un matériau présentant une dureté supérieure à 50 HRB, par le fait que la largeur (L) de la zone d'appui annulaire (210) est inférieure ou égale à 0,6 millimètre, et que la surface de cette zone d'appui (210) présente une rugosité moyenne (Ra) notamment définie par la norme DIN 4768/1, mesurée avec une longueur d'onde de 0,8 millimètre, comprise entre 0,0015 millimètre et 0,02 millimètre.

2. Piston selon la revendication 1, caractérisé par le fait que la largeur (L) de la zone d'appui annulaire (210) est supérieure ou égale à 0,3 millimètre et inférieure ou égale à 0,5 millimètre.

3. Piston selon la revendication 1 ou 2, caractérisé par le fait que la zone d'appui annulaire (210) est délimitée par deux arêtes annulaires concentriques (214, 215), l'arête annulaire interne (214) délimitant un évidement (216) dans lequel débouchent une pluralité d'alvéoles (12), et par le fait que la distance radiale (D) entre le bord de chaque alvéole et ladite arête annulaire interne (214) est non nulle.

4. Piston selon la revendication 3, caractérisé par le fait que ledit évidement (216) comporte une face latérale annulaire (211) définissant avec la zone d'appui (210) ladite arête annulaire interne (214), ladite face latérale annulaire (211) étant sensiblement perpendiculaire au plan moyen de ladite zone d'appui (210).

5. Piston selon l'une des revendications précédentes, caractérisé par le fait que la face (24) du piston possédant ladite zone d'appui (210) comporte en outre une zone centrale (240) coplanaire avec la zone d'appui (210).

6. Piston selon l'une des revendications précédentes, caractérisé par le fait que le matériau de la zone d'appui a une densité au moins égale à 6,4.

## Claims

1. Piston for floating valve for hydraulic shock-absorber tube, comprising a piston body (16) having on one of its faces (24) an annular bearing zone (210) on which the floating valve (15) is intended to bear, characterised by the fact that the bearing zone (210) is made of a material having a hardness greater than 50 RHB, by the fact that the width (L) of the annular bearing zone (210) is less than or equal to 0.6 mm and that the surface of this bearing zone (210) has a mean roughness (Ra) in particular defined by standard DIN 4768/1, measured with a wavelength of 0.8 mm, of between 0.0015 millimetres and 0.02 millimetres.

2. Piston as described in claim 1, characterised by the fact that the width (L) of the annular bearing zone (210) is greater than or equal to 0.3 millimetres and less than or equal to 0.5 millimetres.

3. Piston as described in claim 1 or 2, characterised by the fact that the annular bearing zone (210) is defined by two concentric annular ridges (214, 215), the inner annular ridge (214) defining a groove (216) into which open a plurality of cells (12), and by the fact that the radial distance (D) between the edge of each cell and the said inner annular ridge (214) is not zero.

4. Piston as described in claim 3, characterised by the fact that the said groove (216) includes an annular lateral face (211) defining with the bearing zone (210) the said inner annular ridge (214), the said annular lateral face (211) being substantially perpendicular to the median plane of the said bearing zone (210).

5. Piston as described in one of the preceding claims, characterised by the fact that the face (24) of the piston having the said bearing zone (210) also includes a central zone (240) coplanar with the bearing zone (210).

6. Piston as described in one of the preceding claims, characterised by the fact that the material of the bearing zone has a density equal to at least 6.4.

## Patentansprüche

1. Kolben für eine schwimmende Sperrklappe für einen hydraulischen Stoßdämpferzylinder mit einem Kolbenkörper (16), der auf einer seiner Flächen (24) eine ringförmige Auflagezone (210) aufweist, auf der die schwimmende Sperrklappe (15) aufzuliegen bestimmt ist,
dadurch gekennzeichnet, daß die Auflagezone (210) aus einem Material mit einer Härte von mehr als 50 HRB gefertigt ist, daß die Breite (L) der ringförmigen Auflagezone (210)kleiner gleich 0,6 mm ist, und daß die Oberfläche der Auflagezone (210) einen Mittenrauhwert (Ra) zwischen 0,0015 mm und 0,02 mm aufweist, der durch die Norm DIN 4768/1 definiert ist und mit einer Wellenlänge von 0,8 mm gemessen wird.

2. Kolben nach Anspruch 1, dadurch gekennzeichnet, daß die Breite (L) der ringförmigen Auflagezone (210) größer gleich 0,3 mm und kleiner gleich 0,5 mm ist.

3. Kolben nach Anspruch 1 oder 2, dadurch gekennzeichnet,
daß die ringförmige Auflagezone (210) durch zwei konzentrische ringförmige Grate bzw. Kanten (214,215) umgrenzt ist, wobei die innere ringförmige Kante (214) eine Ausnehmung (216) umgrenzt, in die eine Mehrzahl von Zellen (12) münden, und daß der radiale Abstand (D) zwischen dem Rand jeder Zelle und der ringförmigen inneren Kante (214) nicht Null ist.

4. Kolben nach Anspruch 3, dadurch gekennzeichnet, daß die Ausnehmung (216) eine ringförmige Seitenfläche (211) aufweist, die zusammen mit der Auflagezone (210) die innere ringförmige Kante (214) festlegt, wobei die ringförmige Seitenfläche (211) im wesentlichen senkrecht zur mittleren Ebene der Auflagezone (210) ist.

5. Kolben nach einem der vorangehenden Ansprüche, dadurch gekennzeichnet, daß die die Auflagezone (210) aufweisende Fläche (24) des Kolbens außerdem eine mit der Auflagezone (210) koplanare zentrale Zone (240) umfaßt.

6. Kolben nach einem der vorangehenden Ansprüche, dadurch gekennzeichnet, daß das Material der Auflagezone eine Dichte von mindestens 6,4 hat.
